# EUROPEAN PATENT APPLICATION

(11) **EP 1 004 922 A1**
(43) Date of publication of application: **31.05.2000**
(21) Application number: 99123532.6
(22) Date of filing: 25.11.1999
(51) Int. Cl.: G02F 1/1335

(54) **Liquid crystal display device**

(30) Priority: 26.11.1998 JP 33587198
(71) Applicant: SANYO ELECTRIC CO., LTD., Moriguchi-shi, Osaka (JP)
(72) Inventor: Noritake, Kazuto, Gifu-shi, Gifu (JP); Ogawa, Shinji, Ohgaki-shi, Gifu (JP)
(74) Representative: Hager, Thomas J.

(57) **Abstract**

A reflection type LCD includes a TFT substrate (10) with TFTs and a counter electrode substrate (30) with a color filter (31), a protection film (33), a light-diffusing layer (34), a counter electrode (35) and alignment film (36) which are provided on the side of the TFT substrate. Both substrates are bonded to each other in their periphery by an adhesive sealing material (24). The light diffusing layer is provided only inside an area where the adhesive sealing material (24) is provided. In this configuration, the contact of an adhesive sealing is improved and intrusion of impurities such as moisture into a liquid crystal material is prevented.

## Description

### BACKGROUND OF THE INVENTION

### 1. Field of the Invention

The present invention relates to a liquid crystal display device (LCD) provided with an optical diffused layer.

### 2. Description of the Related Art

Conventionally, a reflection type display has been proposed which light incident from a viewer side is reflected to view a display.

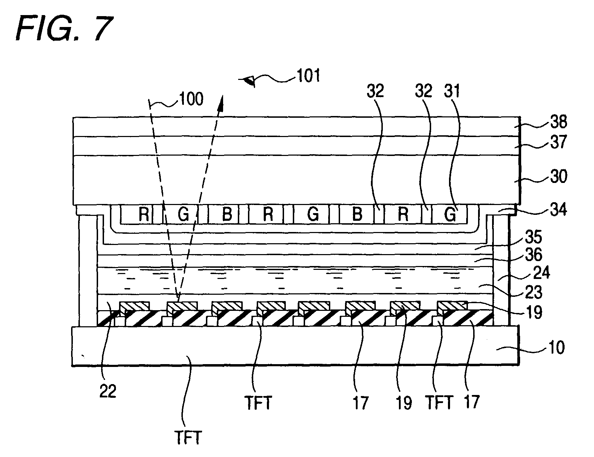

Fig. 7 is a sectional view of a conventional reflection type LCD.

As shown in Fig. 7, in the conventional reflection type LCD, on an insulating substrate 10 made of quartz glass, non-alkali glass, etc. general thin film transistors (TFTs) which are switching elements are formed.

A planarization insulating film 17 is formed on the resultant surface. Further, reflective display electrodes 19 of reflective material such as aluminum (Al) are provided, each of which is connected to the source of the TFT through a contact hole made in the planarization insulating film 17. An alignment film 22 is formed on the entire surface inclusive of the respective reflective display electrodes. In this way, a side of the insulating substrate 10 provided with TFTs (hereinafter referred to as "TFT substrate" ) is completed.

A counter electrode substrate 30 of quartz glass, non-alkaline glass, etc. is facing to the TFT glass 10. On the side of the TFT substrate of the electrode substrate 30, a color filter 31 for the respective colors of red (R), green (G) and blue (B) provided with a black matrix 32 for light interruption is formed. A protection film 33 of resin is formed thereon. On the entire surface of the protection film 33, a light-diffusing layer 34, a counter electrode 35 and alignment film 36 are successively formed. On the side of a viewer 100, on the counter electrode substrate 30, a retardation plate 37 and a polarizing plate 38 are arranged. The counter electrode substrate 30 and TFT substrate 10 are bonded to each other in their periphery by an adhesive sealing material 24 so as to provide a gap therebetween. The gap is filled with twisted nematic (TN) liquid crystal 23.

The light diffusing layer 34, in which beads are mixed into a base material of transparent resin of e.g. polyimide, has a function of diffusing incident light.

As illustrated by solid line with an arrow, natural light 100 is externally incident from the polarizing plate 38 on the side of a viewer. The light reaches the light diffusing layer 34 through the retardation plate 37, counter electrode substrate 30, color filter 31 and protection film 33. The light diffused from the light diffusing layer 34 is transmitted through the counter electrode 35, alignment film 36, TN liquid crystal 23 and alignment film 22 on the TFT substrate 10, and is reflected by the reflective electrode 19. The reflected light is transmitted through the respective layers in an opposite direction to the incident light, and is emitted from the polarizing plate 38 on the counter electrode substrate 30 to enter the eye 101 of a viewer.

However, in the conventional reflection type LCD, since the light-diffusing layer 34 extends to the bottom of the adhesive sealing material 24 bonding both substrates to each other, it is exposed to the outside air. Therefore, it will absorb moisture contained in the outside air so that the contactness at the interface between itself and the adhesive sealing material is deteriorated. The intrusion of moisture will deteriorate the liquid crystal material, thus leading to poor display.

### SUMMARY OF THE INVENTION

An object of the present invention is to a reflection type LCD which can improve the contact of an adhesive sealing material and prevents intrusion of impurities such as moisture into a liquid crystal material.

In order to attain the above object, there is provided a liquid crystal display comprising:
a first substrate on the surface of which a first electrode is formed;
a second substrate with a second electrode facing to said first electrode;
a liquid crystal material which is sandwiched between said first and said second substrate; and
a sealing material for sealing said first and said second substrate on their periphery,
   wherein a light diffusing layer is formed at least one between said first electrode and said first substrate and between said second electrode and said second substrate so that its edge is located inside said sealing material.

A second aspect of the device is a liquid crystal display according to the first aspect, wherein said light diffusing layer is made of an insulating material containing bead particles.

A third aspect of the device is a liquid crystal display according to the first aspect, wherein said first electrode is a display electrode which is connected to a switching element formed on the first substrate.

A fourth aspect of the device is a liquid crystal display according to the first aspect, wherein said light diffusing layer is made of a resin containing an acryl resin and bead particles.

A fifth aspect of the device is a liquid crystal display according to the first aspect, wherein said light diffusing layer is made of polyimide resin containing bead particles.

A sixth aspect of the device is a liquid crystal display according to the first aspect, wherein said first substrate is provided with a third electrode, a light diffusing layer formed so as to cover said third electrode and said first electrode which is formed on the light diffusing layer and is connected to the third electrode through a contact hole formed in said light diffusing layer.

A seventh aspect of the device is a liquid crystal display according to the sixth aspect, wherein said first electrode is made of ITO.

An eighth aspect of the device is a liquid crystal display according to the third aspect, wherein said switching element is a thin film transistor formed on the surface of said first substrate.

A ninth aspect of the device is a liquid crystal display according to the first aspect, wherein said light diffusing film is a resin film which is formed by spin-coating acryl resin containing bead particles each having a diameter of 1 - 5 µm.

A tenth aspect of the device is a liquid crystal display according to the first aspect, wherein said light diffusing layer has a thickness of 2 - 30µm.

An eleventh aspect of the device is a liquid crystal display according to the first aspect, wherein a protection film is formed on said light diffusing layer.

A twelfth aspect of the device is a liquid crystal display according to the eleventh aspect, wherein said light diffusing layer has a refractive index equal to that of said protection film at least an interface therebetween.

A thirteenth aspect of the device is a liquid crystal display according to the eleventh aspect, wherein said insulating material of the light diffusing layer has a refractive index equal to that of said protection film.

A fourteenth aspect of the device is a liquid crystal display according to the first aspect, wherein said first electrode is a reflection type display electrode.

A fifteenth aspect of the device is a liquid crystal display according to the fourteenth aspect, wherein said second substrate on which a light diffusing layer is formed, is provided with a color filter layer as an underlying layer of said light diffusing layer.

A fifteenth aspect of the device is a liquid crystal display according to the fourteenth aspect, wherein alignment films are arranged between said first and said second electrode and said liquid crystal, respectively.

The above and other objects and features of the present invention will be more apparent from the following description taken in conjunction with the accompanying drawings.

### BRIEF DESCRIPTION OF THE DRAWINGS

Fig. 1 is a sectional view of a first embodiment of the reflection type LCD according to the present invention;
Fig. 2 is a sectional view of a second embodiment of the reflection type LCD according to the present invention;
Fig. 3 is a sectional view of the vicinity of the sealing material of the LCD shown in Fig. 2;
Fig. 4 is a sectional view of a third embodiment of the transmittance type LCD according to the present invention;
Fig. 5 is a sectional view of a fourth embodiment of the reflection type LCD according to the present invention;
Fig. 6 is a partially enlarged view of the LCD according to the fourth embodiment; and
Fig. 7 is a sectional view of a conventional reflection type LCD.

### DESCRIPTION OF THE PREFERRED EMBODIMENTS

### Embodiment 1

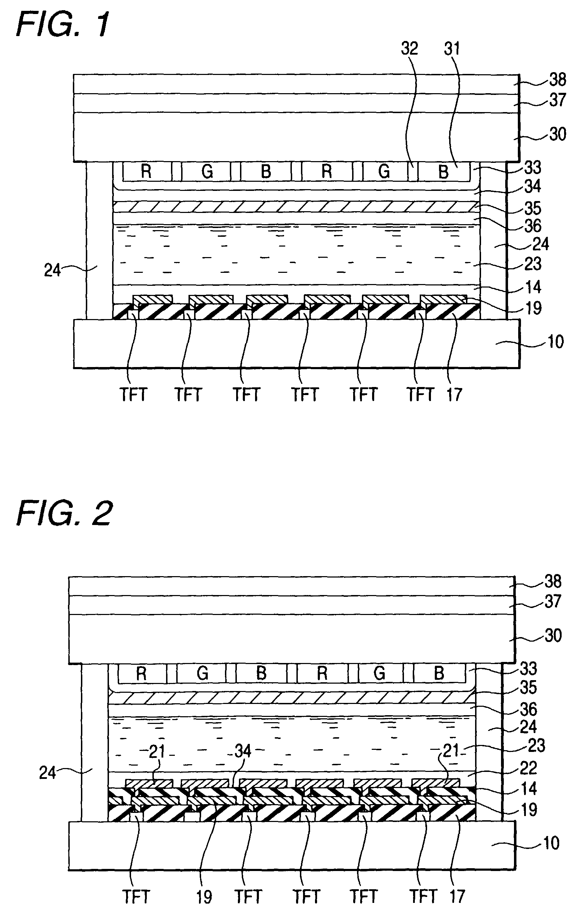

Fig. 1 is a sectional view of a first embodiment of the reflection type LCD according to the present invention. As shown in Fig. 1, in this embodiment, the structure on the TFT substrate 10, which succeeds from provision of TFTs to that of the alignment film 22 on the reflective display electrodes 22 is the same as the conventional structure, is not explained here.

A counter electrode substrate 30 made of quartz glass, non-alkaline glass, etc. is arranged facing to the TFT glass 10. On the side of the TFT substrate of the electrode substrate 30, a color filter 31 for the respective colors of red (R), green (G) and blue (B) provided with a black matrix 32 for light interruption are formed. A protection film 33 of transparent resin is formed thereon to protect the color filter 31. The entire surface of the protection film 33 is coated with a light diffusing layer 34 by a spinner. Thereafter, the light diffusing layer 34 is left in only an area inside the adhesive sealing material 24 which bonds the counter electrode substrate 30 and TFT substrate 10 to each other in their periphery.

On the light diffusing layer 34, the counter electrode 35 and alignment film 36 are formed. On the side of the counter electrode substrate 30 not facing to the light diffusing layer 34, the retardation plate 37 and a polarizing plate 38 are arranged.

The counter electrode substrate 30 and TFT substrate 10 are bonded to each other in their periphery by the sealing adhesive material 24 so as to provide a gap therebetween. The gap is filled with twisted nematic (TN) liquid crystal 23.

The light diffusing layer 34 formed will be explained, hereafter.

The light diffusing layer 34 has a structure in which beads are mixed into a base material of transparent resin of e.g. polyimide, acryl, etc. The beads mixed into the base material have a function of diffusing incident light on the light diffusing layer 34.

The light diffusing layer 34 is applied onto the protection film 33 by the spinner. After dried, a mask pattern, e.g. resist pattern which leaves the light diffusing layer 34 inside the sealing adhesive material 24 is formed on the light diffusing layer 34. The light diffusing layer 34 at the periphery inclusive of the region where the adhesive sealing material 24 is formed is etched away. Namely, the light diffusing layer 34 is left only inside the adhesive sealing material 24.

Thus, the light diffusing layer 34 is formed on the protection film 33 without being left under the adhesive sealing material 24.

On the light-diffusing layer, the counter electrode 35 and alignment film 36 made of a transparent material such as ITO (Indium Tin Oxide) are formed.

As described above, the light-diffusing layer 34 is not formed under the adhesive sealing material 24 so that it is not brought into contact with the outside air. This prevents the liquid crystal material 23 from being deteriorated owing to moisture contained in the outside air and improves the contact of the sealing adhesive material 24 with the light diffusing layer 34.

In this embodiment, although the light diffusing layer 34 was formed on the protection film, it can be formed on the color filter 31 so as to provide the same effect.

### Embodiment 2

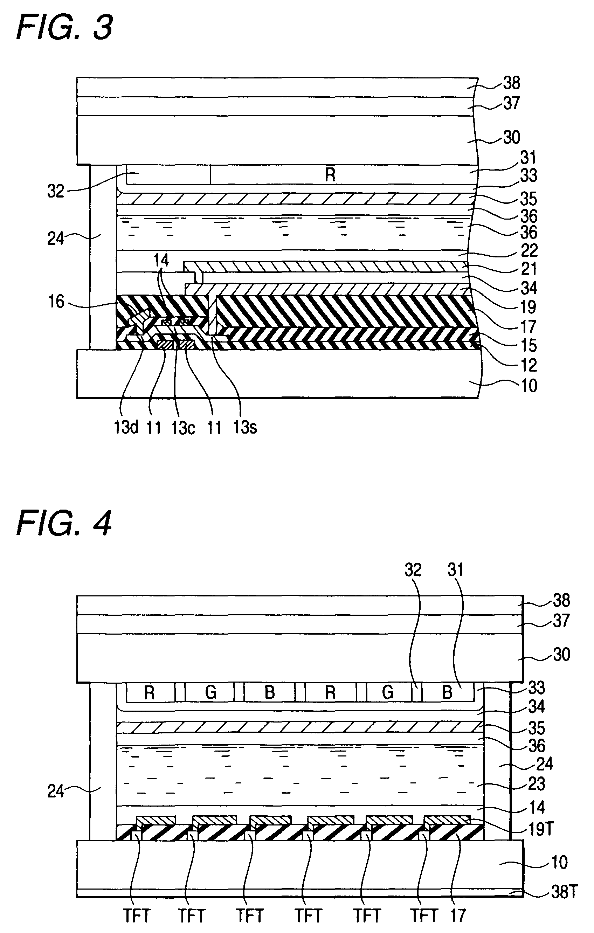

Fig. 2 is a sectional view of a second embodiment of the reflection type LCD according to the present invention. Fig. 3 is a sectional view of the vicinity of the sealing material in Fig. 2.

This embodiment is different from the first embodiment in that the light diffusing layer 34 is formed on the side of the TFT substrate 10 but not on the side of the counter substrate 30.

As shown in Fig 2, on an insulating substrate 10 made of quartz glass, non-alkali glass, etc. general thin film transistors (TFTs) which are switching elements are formed. The insulating substrate 10 provided with TFTs is referred to as "TFT substrate"

As shown in Fig. 3, on the TFT substrate 10, gate electrodes 11 made of refractory metal such as Cr, Mo, etc., a gate insulating film 12 and an active layer 13 of a polysilicon film are successively formed.

The active layer 13 includes a channel 13c formed above the gate electrodes 11, and source 13s and drain 13d on both sides of the channel 13c which are formed by ion-implantation using a stopper insulating film 14 on the channel 13c as a mask.

An interlayer insulating film 15 composed of an SiO₂ film, SiN film and SiO₂ film deposited in this order is formed on the entire surface of the gate insulating film 12, active layer 13 and stopper insulating film 14,. A contact hole made so as to correspond to the drain 13d is filled with metal such as aluminum (Al) to form a drain electrode 16. A planarization insulating film 17 made of e.g. organic resin is formed on the entire surface so that the surface is flat.

A conductive reflective material such as Al, Ag, etc. is deposited on the flattened insulating film 17 with the contact holes. Reflective display electrodes 19 are formed by photolithography.

A light diffusing layer 34 is applied on the entire surface of the reflective display electrodes 19 using a spinner.

The light diffusing layer 34 has a structure in which beads are mixed into a base material of transparent resin of e.g. polyimide, acryl, etc. The beads mixed into the base material have a function of diffusing incident light on the light diffusing layer 34.

A contact hole is made in the light diffusing layer 34 to reach the reflective display electrode 19. A transparent conductive material is deposited on the entire surface of the light diffusing layer 34 to form transparent electrodes 21 each having an area which is approximately equal to or slightly larger than that of the reflective display electrode 19. An alignment film for alignment the liquid crystal 23 is formed on the entire surface.

Since the light diffusing layer 34 is provided on the reflective display electrode 19, the interval between the liquid crystal 23 and the reflective display electrodes increases. Therefore, the voltage which should be applied to the liquid crystal display 23 may not be applied there. In order to obviate this inconvenience, a transparent electrode 21 is provided on the light diffusing layer 34. Since each of the transparent electrodes 21 is connected to the reflective display electrode 34 through the contact hole formed in the light diffusing layer 34. Therefore, the voltage applied to the reflective display electrode 19 is applied to the transparent electrode 21 and further applied to the liquid crystal 23. Thus, the TFT substrate is completed.

On the counter electrode substrate 30 of quartz glass or non-alkali glass, on the side of the liquid crystal 23, a counter electrode 35 facing to each transparent electrode is provided on the entire surface. An alignment film 36 of polyimide is formed on the entire surface.

On the side of the counter electrode substrate 30 where the liquid crystal is not arranged, i.e. on the side of a viewer, a retardation (λ/4) plate 37 and a polarizing plate 38 are provided in order.

Thus, the respective layers of the counter electrode substrate 30 are completed. The counter electrode substrate 30 and TFT substrate 10 are bonded to each other in their periphery by the sealing adhesive material 24 so as to provide a gap therebetween. The gap is filled with liquid crystal 23 to complete the reflection type liquid crystal display.

It should be noted that the light-diffusing layer 34 is not superposed on the adhesive sealing material 24, but formed in a region inside the adhesive sealing material.

The light-diffusing layer applied on the reflective display electrode 19 is removed at the area where the peripheral adhesive sealing material 24 is arranged and the region outside of it.

Thus, the light diffusing layer inside the adhesive sealing material 24 will not be brought into contact with the outside air. This prevents the liquid crystal material 23 from being deteriorated owing to moisture contained in the outside air and improves the contact of the sealing adhesive material 24 with the light diffusing layer 34.

In accordance with the present invention, the contact of the sealing adhesive material is improved, and the liquid crystal material is prevented from being deteriorated owing to moisture contained in the outside air.

### Embodiment 3

Fig. 4 is a sectional view of a third embodiment of the transmissive LCD according to the present invention. As shown in Fig.4, the points that the LCD is different from the LCD of the first and second embodiments shown in Figs.1 to 3 are the following three points. First point of them is that a polarizing plate 38T is formed on a rear surface of the TFT substrate 10. Second point of them is that a transparent ITO electrode 19T is formed in place of the display electrode 19. Third point of them is that a retardation (λ/4) plate 37 formed on the rear side of the counter electrode substrate 30 as the first substrate is removed.
In Fig.4, same numerals are added to the same parts of the first and second embodiments. And detailed explanation is submitted.

### Embodiment 4

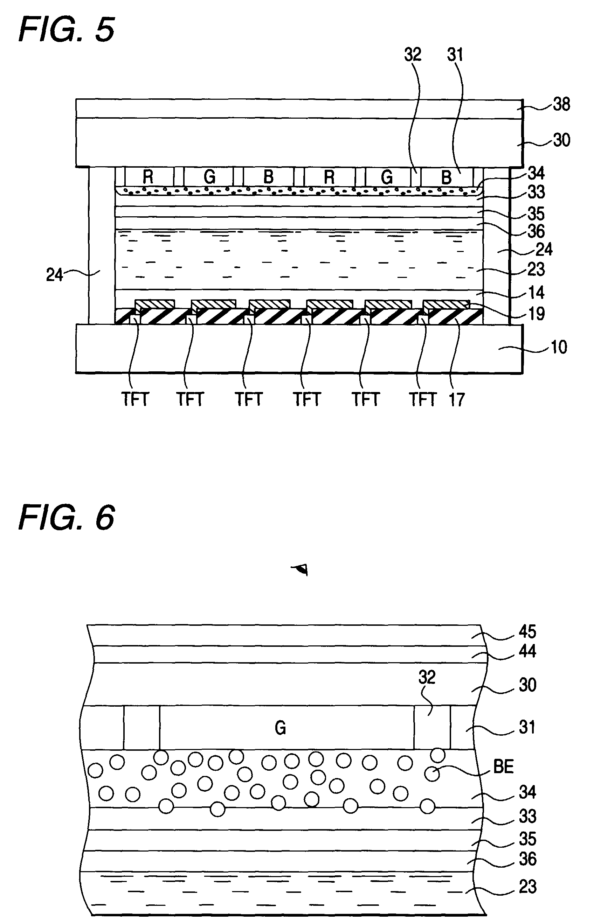

Fig. 5 is a sectional view of a fourth embodiment of the reflective type LCD according to the present invention. Fig. 6 is a partially enlarged view of the LCD according to the fourth embodiment.

In this embodiment, the light diffusing layer 34 is formed in such a manner that after the color filter 31 has been formed, its entire surface is coated with the acryl resin as a base material mixed with bead particles BE. In the coating step, the acryl resin is prepared as a liquid so as to have a viscosity of 20-30 c.p. and coated at rotation speed between 2000-3000 r.p.m. The thickness thereof ranges from about 8 µm to about 11 µm. The bead particles BE are roughly spherical in shape with a diameter of 2 - 5 µm.

A transparent insulating film, e.g. acryl resin is applied onto the entire surface of the light diffusing layer 34 using a spinner to form the protection film 33. A material of ITO is sputtered on the protection film 33 to form the counter electrode 35. The alignment film 36 of resin such as polyimide for aligning the liquid crystal 21 is formed thereon. In this case, if the base material of the light diffusing layer 34 has a different refractive index from that of the protection film 33, the light incident on the light diffusing layer 34 is reflected at the boundary between itself and the protection film 34 and outgoes toward the viewer side. In order to obviate such an inconvenience, the refractive index of the protection film 33 is preferably equal to that of the base material of the light diffusing layer 34. In this embodiment, the protection film 34 is made of acryl resin having a refractive index of 1.4 - 1.6.

In this way, the respective layers are completed on the side of liquid crystal 21 of the counter electrode substrate 30 equipped with the light diffusing layer 34. On the side where the liquid crystal is not arranged, i.e. the viewer side, of the counter electrode substrate 30, a retardation (λ/4) plate 37 and a polarizing plate 38T are successively formed.

As understood from the description hitherto made, even if the projections each with a height of about 200 A - about 2000 A are produced on the light diffusing layer 34 because of the bead particles BE (whose mixing quantity has been increased to improve the diffusion degree of the light diffusing layer 34 formed on the color filter film 31), since the protection film 33 is provided on the light diffusing layer 34, no projection occur in the alignment film 36. Thus, the counter electrode and alignment film can have a flat surface.

Specifically, even if the light diffusing layer 34 has projections because of the bead particles BE, the protection film is formed on the light diffusing layer 34 so that it is made of the material capable of absorbing the height of the projections, i.e. providing a flat surface regardless with the unevenness of the surface of the light diffusing layer 34, e.g. acryl resin. Therefore, the surface of the protection film becomes flat. Accordingly, the surfaces of the counter electrode 35 and the alignment film 36 which are formed on the protection film 33 can be also made flat.

As a result, the voltage applied to the counter electrode 35 is uniformly applied to the liquid crystal 21 so that no changes in the alignment of the liquid crystal is produced. This prevents poor display with inconsistencies. In addition, the provision of the light diffusing layer 34 can provide a uniform and bright display on the LCD. And when no voltage is applied to the electrodes, good alignment of the liquid crystal 21 is kept owing to the flatness of the surface of the alignment film.

Preferably the said protection film has a thickness of 0.1 to 10µm, more preferably 1 to 5µm.

Further the light diffusing film preferably is made of resin film which is formed by spin-coating acryl resin containing bead particles each having a diameter of 1 to 5µm.

Preferably the light diffusing layer has a thickness of 2- 30µm, more preferably 20 to 30µm.

## Claims

1. A liquid crystal display comprising:
a first substrate on the surface of which a first electrode is formed;
a second substrate with a second electrode facing to said first electrode;
a liquid crystal material which is sandwiched between said first and said second substrate; and
a sealing material for sealing said first and said second substrate on their periphery,
wherein a light diffusing layer is formed at least one between said first electrode and said first substrate and between said second electrode and said second substrate so that its edge is located inside said sealing material.

2. A liquid crystal display according to claim 1, wherein said light diffusing layer is made of an insulating material containing bead particles.

3. A liquid crystal display according to claim 1 or claim 2, wherein said first electrode is a display electrode which is connected to a switching element formed on the first substrate.

4. A liquid crystal display according to anyone of claims 1 to 3, wherein said light diffusing layer is made of a resin containing an acryl resin and bead particles.

5. A liquid crystal display according to anyone of claims 1 to 3, wherein said light diffusing layer is made of polyimide resin containing head particles.

6. A liquid crystal display according to anyone of claims 1 to 5, wherein said first substrate is provided with a third electrode, a light diffusing layer formed so as to cover said third electrode and said first electrode which is formed on the light diffusing layer and is connected to the third electrode through a contact hole formed in said light diffusing layer.

7. A liquid crystal display according to anyone of claims 1 to 6, wherein said first electrode is made of ITO.

8. A liquid crystal display according to claim 3, wherein said switching element is a thin film transistor formed on the surface of said first substrate.

9. A liquid crystal display according to anyone of claims 1 to 8, wherein said light diffusing film is a resin film which is formed by spin-coating acryl resin containing bead particles each having a diameter of 1 - 5 µm.

10. A liquid crystal display according to anyone of claims 1 to 9, wherein said light diffusing layer has a thickness of 2 - 30µm.

11. A liquid crystal display according to anyone of claims 1 to 10, wherein a protection film is formed on said light diffusing layer.

12. A liquid crystal display according to claim 11, wherein said light diffusing layer has a refractive index equal to that of said protection film at least an interface therebetween.

13. A liquid crystal display according to claim 11 or claim 12, wherein said insulating material of the light diffusing layer has a refractive index equal to that of said protection film.

14. A liquid crystal display according to anyone of claims 1 to 13, wherein said first electrode is a reflection type display electrode.

15. A liquid crystal display according to anyone of claims 1 to 14, wherein said second substrate on which a light diffusing layer is formed, is provided with a color filter layer as an underlying layer of said light diffusing layer.

16. A liquid crystal display according to anyone of claims 1 to 15, wherein alignment films are arranged between said first and said second electrode and said liquid crystal, respectively.
